# EUROPÄISCHE PATENTANMELDUNG

(11) **EP 3 854 221 A1**
(43) Veröffentlichungstag der Anmeldung: **28.07.2021**
(21) Anmeldenummer: 21152695.9
(22) Anmeldetag: 21.01.2021
(51) Int. Cl.: A23K 20/26, C01B 25/00, C05B 7/00

(54) **VERFAHREN ZUR BEREITSTELLUNG VON PHOSPHAT AUS EINER PHYTAT-HALTIGEN BIOMAS-SE, PHYTAT- UND PHOSPHAT-REDUZIERTE BIOMASSE UND VERWENDUNGEN HIERVON**

(30) Priorität: 21.01.2020 DE 102020200670
(71) Anmelder: Rheinisch-Westfälische Technische Hochschule (RWTH) Aachen, 52062 Aachen (DE)
(72) Erfinder: Ruff, Anna Joelle, 4654 Charneux Herve (BE); Schwaneberg, Ulrich, 4728 Kelmis-Hergenrath (BE); Herrmann, Kevin, 52070 Aachen (DE)
(74) Vertreter: Pfenning, Meinig & Partner mbB

(57) **Zusammenfassung**

Es wird ein Verfahren zur Bereitstellung von Phosphat aus einer Phytathaltigen Biomasse bereitgestellt. Zudem wird eine Phytat- und Phosphat-reduzierte Biomasse bereitgestellt und Verwendungen hiervon vorgeschlagen. Das Verfahren umfasst eine Bereitstellung eines wässrigen Gemisches, in dem eine Phytat-haltige Biomasse in Wasser suspendiert ist, eine Zugabe einer Phytase zu dem wässrigen Gemisch, ein Inkubieren für einen bestimmten Zeitraum und ein Abtrennen von Phosphat von dem Gemisch. Das Verfahren erlaubt die Bereitstellung der Phosphorquelle Phosphat auf umweltschonende, einfache, schnelle und kostengünstige Art und Weise. Zudem wird über das Verfahren eine Phytat-reduzierte und Phosphat-reduzierte Biomasse bereitgestellt, die sich in großen täglichen Mengen als Tierfuttermittel verwenden lässt, ohne dass bei den Tieren oder dem Boden, auf dem die Tiere gehalten werden, Phytat-bedingte, schädliche Wirkungen auftreten.

## Beschreibung

Es wird ein Verfahren zur Bereitstellung von Phosphat aus einer Phytat-haltigen Biomasse bereitgestellt. Zudem wird eine Phytat- und Phosphat-reduzierte Biomasse bereitgestellt und Verwendungen hiervon vorgeschlagen. Das Verfahren umfasst eine Bereitstellung eines wässrigen Gemisches, in dem eine Phytat-haltige Biomasse in Wasser suspendiert ist, eine Zugabe einer Phytase zu dem wässrigen Gemisch, ein Inkubieren für einen bestimmten Zeitraum und ein Abtrennen von Phosphat von dem Gemisch. Das Verfahren erlaubt die Bereitstellung der Phosphorquelle Phosphat auf umweltschonende, einfache, schnelle und kostengünstige Art und Weise. Zudem wird über das Verfahren eine Phytat-reduzierte und Phosphat-reduzierte Biomasse bereitgestellt, die sich in großen täglichen Mengen als Tierfuttermittel verwenden lässt, ohne dass bei den Tieren oder dem Boden, auf dem die Tiere gehalten werden, Phytat-bedingte, schädliche Wirkungen auftreten.

Das Element Phosphor wird von Tieren und Pflanzen auf vielfältige Art und Weise benötigt und ist für diese ein essentieller Nährstoff. Dünge- und Futtermittel stellen es zur Verfügung, sind in ihrer Herstellung aber auf phosphorhaltige Erze als Quelle für das Element Phosphor angewiesen. Zur Dünge- und Futtermittelherstellung werden 83 % der nach Deutschland importierten Phosphorquellen eingesetzt. Deutschland ist hierbei vollständig vom Import des Phosphors abhängig, d.h. in Deutschland wird bislang keine Phosphorquelle für die Dünge- und Futtermittelherstellung in industriellem Maßstab bereitgestellt. Geopolitisch liegen die Phosphor-Lagerstätten in wenigen Ländern. Marokko ist hier hervorzuheben, da je nach Schätzung über 80 % der Phosphorvorkommen in der westlichen Sahara liegen.

Es ergibt sich somit erstens eine große Abhängigkeit vom Import von Phosphor aus dem Bergbau in anderen Ländern und dem für Phosphor aus dieser Quelle aufgerufenen Weltmarktpreis. Die weltweiten Phosphor-Ressourcen sind endlich und die Verwendung von ausschließlich importiertem Phosphor generiert eine Abhängigkeit für die Lebensmittelherstellung. Die Gewinnung des phosphorhaltigen Erzes ist zudem mit einem hohen Flächenverbrauch verbunden. Für die anschließende Aufbereitung des Erzes werden eine große Menge Wasser und weitere Ressourcen benötigt.

Darüber hinaus wird der weltweite Bedarf an Phosphor durch die wachsende Bevölkerung der Erde steigen. Durch den weltweit ansteigenden Bedarf an Phosphor werden zukünftig auch weniger abbauwürdige Erzlagerstätten abgebaut. Diese Lagerstätten sind jedoch höher mit Cadmium und Uran belastet. Bei einer ungenügenden Aufreinigung und Entfernung der Schwermetalle ist mit einem Anstieg der Schwermetallkonzentration in Nahrungsmitteln zu rechnen. Negative Folgen für die Gesundheit von Menschen und Tieren können in diesem Fall nicht ausgeschlossen werden. Eine Abreicherung dieser Schwermetalle, beispielsweise für hochwertige Nahrungsmittel, ist nur unter hohem Aufwand, d.h. einem hohen Ressourcenverbrauch, möglich und damit weder ökonomisch noch ökologisch. Für die Herstellung von Phosphat-Dünger ist eine solche Abreicherung auf wirtschaftliche Art und Weise derzeit gar nicht möglich. Ferner wird Phosphor in landwirtschaftlichen Nebenströmen bislang nicht verwertet und gelangt über die Tierernährung und Düngung in die Felder und Gewässer. Die mangelnde Verwertung trägt zur Sättigung von Feldern mit nicht-pflanzenverfügbarem Phosphor (z.B. an Phytat gebundener Phosphor) und zur Eutrophierung von Gewässern bei. Aktuell ist kein Nachhaltigkeitskonzept für das Phosphor-Recycling vorhanden, d.h. es existiert kein geschlossener Phosphor-Kreislauf. Die Folge sind bislang hohe Verluste an Phosphor und weiterhin große Flächen in der Landwirtschaft, die mit nicht-pflanzenverfügbarem Phosphor gesättigt sind (in NRW >58 % der Anbaufläche).

Die Nutzung von Phytat-haltigen, nachwachsenden Rohstoffen (z.B. Pflanzenschrot) als Tierfutter ist bislang auf ca. 10 Massenprozent, in Bezug auf die Gesamtmasse des Futtermittels, limitiert. Grund hierfür ist das Phytat in diesen Rohstoffen. Phytat ist ein starker Chelatbildner, der bestimmte Mineralien (z.B. Ca und Mg) so stark bindet, dass sie für ein Lebewesen, das Phytat zu sich nimmt, nicht mehr bioverfügbar sind. Wird Phytat zusammen mit einem Mineralstoffhaltigen Lebensmittel an ein Tier verfüttert, kann das Tier die Mineralstoffe nicht aufnehmen. Mangelerscheinungen können die Folge sein. Phytat hat insofern einen "antinutritiven" Effekt, was die Verwendung von Phytat-haltigen nachwachsenden Rohstoffen als Futtermittel für Tiere bislang limitiert.

Die DE 10 2012 220 810 B3 offenbart ein Verfahren zur Rückgewinnung organischer und anorganischer Phosphorverbindungen aus einer Biomasse, die einen hohen Anteil an zweiwertigen Ionen aufweist, wobei bei dem Verfahren zweiwertige Ionen in schwerlösliche chemische Verbindungen umgewandelt werden, dann eine Phosphatase zugegeben wird, um organisch an Biomasse gebundenen Phosphor in leicht lösliche anorganische Phosphate zu überführen und anschließend anorganische Phosphate abgetrennt werden. Das Verfahren zur Gewinnung von anorganischen Phosphaten aus Biomasse hat den Nachteil, dass es einen Umwandlungsschritt von zweiwertigen Ionen in schwerlösliche chemische Verbindungen aufweist, was recht zeitaufwändig und auch mit höheren Kosten verbunden ist.

Die DE 10 2015 118 900 A1 offenbart ein Verfahren zur Gewinnung von Phosphat aus wertstoffhaltigem Rohstoff, bei dem in eine Suspension einer Biomasse ein Extraktionsmittel eingeleitet wird, wobei das Extraktionsmittel eine Kombination von CO₂ und SO₂ (optional mit NOₓ), eine Kombination von CO₂ und NOₓ oder SO₂ ist, dann ungelöste Feststoffe von der Suspension abgetrennt werden und letztlich aus der verbleibenden Flüssigkeit gelöste Phosphate ausgefällt und abgetrennt werden. Dieses Verfahren hat den Nachteil, dass die verwendeten Extraktionsmittel bei großtechnischer Verwendung mit höheren Kosten verbunden sind und sie zudem eine korrosive Wirkung auf das Behältermaterial ausüben, in dem die Biomasse suspendiert ist, was zusätzliche Kosten für Reparatur bzw. Auswechslung der Behältermaterialien verursachen kann.

Ausgehend hiervon war es die Aufgabe der vorliegenden Erfindung, ein Verfahren bereitzustellen, über welches das Element Phosphor ohne die im Stand der Technik vorhandenen Probleme zugänglich gemacht wird. Insbesondere sollte ein Verfahren bereitgestellt werden, mit dem das Element Phosphor (insbesondere in Form von Phosphat) umweltschonender und in einfacherer, schnellerer und kostengünstigerer Art und Weise bereitgestellt werden kann. Eine weitere Aufgabe ist die Bereitstellung einer Phytat- und Phosphat-reduzierten Biomasse, die auch in großen täglichen Mengen als Nahrungsmittel, insbesondere als Tierfuttermittel, verwendet werden kann, ohne den Boden, auf dem die Tiere gehalten werden, unnötig mit Phosphat zu belasten.

Die Aufgabe wird gelöst durch das Verfahren mit den Merkmalen von Anspruch 1, die Biomasse mit den Merkmalen von Anspruch 13 und die Verwendung der Biomasse mit den Merkmalen von Anspruch 15. Die abhängigen Ansprüche zeigen vorteilhafte Weiterbildungen auf.

Erfindungsgemäß wird ein Verfahren zur Bereitstellung von Phosphat aus einer Phytat-haltigen Biomasse bereitgestellt, umfassend die Schritte
a) Bereitstellung eines wässrigen Gemisches, in dem eine Phytat-haltige Biomasse in Wasser suspendiert ist;
b) Zugabe einer Phytase zu dem wässrigen Gemisch;
c) Inkubieren für einen bestimmten Zeitraum; und
d) Abtrennen von Phosphat von dem Gemisch.

Unter dem Begriff "Phytat" wird erfindungsgemäß auch die protonierte Form des Phytats, d.h. die Phytinsäure, verstanden.

Durch die Zugabe der Phytase wird das in der Phytat-haltigen Biomasse vorliegende Phytat (Hexa-Phospho-Inosit bzw. InsP₆) zu freiem Phosphat und einem Inosit mit einem geringeren Veresterungsgrad, d.h. einem Inosit mit einem geringeren Phosphatgehalt, hydrolysiert. Durch das Verfahren wird somit das in der Biomasse vorliegende Phytat abgebaut und gleichzeitig Phosphat (in der Form von ortho-Phosphat) bereitgestellt.

Das erfindungsgemäße Verfahren ermöglicht es, konventionell über Bergbau erhaltenes Phosphat durch Phosphat zu substituieren, das vor Ort aus Biomasse bereitgestellt wird. Ein Import von Phosphaterz über lange Transportwege (z.B. aus Marokko) kann durch eine solche Substitution reduziert werden. Für Länder mit geringem Phosphorerz-Vorkommen kann somit die Notwendigkeit eines Phosphor-Imports reduziert oder sogar unnötig werden, wodurch eine autarke Bereitstellung von Dünge- und Futtermitteln in diesen Ländern eröffnet wird. Zudem entsteht bei der Bereitstellung von Phosphat über das erfindungsgemäße Verfahren weniger umweltschädigendes Material (z.B. CO₂ und Abfall), das sonst für den Phosphorerz-Abbau, den Transport des Phosphorerzes über Ländergrenzen und die Herstellung von Phosphorsäure aus Phosphorerz erzeugt wird. Ferner kann ein Gesteinsabbau, der durch die konventionelle Phosphatgewinnung nötig ist und in die Ökosysteme der Phosphaterz-Lagerstätten eingreift, verringert werden. Das bereitgestellte Verfahren leistet somit einen Beitrag zum nachhaltigen Phosphor-Ressourcen-Management in der Landwirtschaft.

Ein weiterer wichtiger Vorteil des erfindungsgemäßen Verfahrens ist, dass neben Phosphat eine Phytat-reduzierte Biomasse bereitgestellt wird, da aufgrund der enzymatischen Wirkung der Phytase das in der Biomasse enthaltene Phytat abgebaut und damit abgereichert wird. Die Phytat-reduzierte Biomasse weist einen geringeren antinutritiven Effekt auf, wodurch die Phytat-reduzierte Biomasse in höheren täglichen Mengen als Futtermittel an Tiere verfüttert werden kann, ohne dass eine Mangelerscheinung an bestimmten Mineralstoffen (z.B. Calcium und Magnesium) befürchtet werden muss. Eine Verfütterung der Phytat-reduzierten Biomasse an Tiere bewirkt zudem, dass von den Tieren weniger Phytat auf die Felder ausgeschieden wird, auf denen sie gehalten werden. Da Phytat eine für Pflanzen nicht zugängliche Phosphatquelle darstellt, gelangt somit weniger nicht-pflanzenverfügbares Phosphat auf die Felder. Die Felder werden daher nicht unnötig mit Phytat belastet. Der Phosphat-Gehalt der Biomasse ist zwar reduziert, aber der verbleibende Phosphat-Gehalt ist ausreichend hoch, um eine Düngung der Agrarfläche zu gewährleisten, auf dem die Tiere gehalten werden, die mit der Phosphat-reduzierten Biomasse gefüttert werden. Ein Vorteil der Verwendung der Phosphat-reduzierten Biomasse ist, dass eine Überdüngung der Agrarfläche mit zu viel Phosphat vermieden wird.

Das Verfahren kann dadurch gekennzeichnet sein, dass in einem Schritt nach Schritt c) eine Phytat-reduzierte Biomasse von dem Gemisch abgetrennt wird. Die Abtrennung kann vor Schritt d), während Schritt d) und/oder nach Schritt d) erfolgen. Bevorzugt erfolgt die Abtrennung über mindestens einen Schritt ausgewählt aus der Gruppe bestehend aus Zentrifugation, Filtration und Kombinationen hiervon. In einer bevorzugten Ausführungsform ist die Filtration ausgewählt aus der Gruppe bestehend aus Mikrofiltration, Ultrafiltration, Nanofiltration, Tellerzentrifugation (z.B. mit einem Tellerseparator) und Kombinationen hiervon. Die Filtration kann eine Cross-Flow-Filtration (Tangentialflussfiltration) sein. In dieser Ausführungsform wird die Phytat-reduzierte Biomasse auch von der Phytase abgetrennt, d.h. die Phytase verbleibt in dem restlichen Gemisch. Das kann ein Vorteil sein, falls die Phytase für eine erneute Durchführung des Verfahrens wiedergewonnen wird, beispielsweise wenn das Verfahren als kontinuierliches Verfahren betrieben wird. In diesem Fall kann die Wiedergewinnung der Phytase ökonomischer sein als die Verwendung von Phytat-reduzierter und Phytase-haltiger Biomasse als Futtermittel.

In einer bevorzugten Ausführungsform wird in Schritt d) das Phosphat von dem Gemisch über mindestens einen Schritt ausgewählt aus der Gruppe bestehend aus Zentrifugation, Fällung, Filtration und Kombinationen hiervon, abgetrennt. Bevorzugt ist die Filtration ausgewählt aus der Gruppe bestehend aus Mikrofiltration, Ultrafiltration, Nanofiltration, Umkehrosmose und Kombinationen hiervon. Die Filtration kann eine Cross-Flow-Filtration (Tangentialflussfiltration) sein. Der Vorteil an der Cross-Flow-Filtration gegenüber einer Dead-End-Filtration ist, dass die eingesetzten Membranen weniger schnell zusetzen und damit die Filtration über längere Zeiträume ohne ein Wechseln oder Freispülen der Membranen durchgeführt werden kann. Das Verfahren wird damit ökonomischer.

In einem Schritt nach Schritt c) und vor Schritt d) kann ein Teil des im Gemisch vorhandenen Phosphats in Polyphosphat kondensiert werden. Zudem kann nach Schritt d) zumindest ein Teil des abgetrennten Phosphats zu Polyphosphat kondensiert werden. Der Vorteil an der Umsetzung von Phosphat zu Polyphosphat ist, dass das Phosphat in einen anderen Lebensmittelzusatzstoff umgewandelt wird, der für die Industrie relevant ist. Die Kondensation zu Polyphosphat erfolgt bevorzugt über ein biotechnologisches Verfahren, besonders bevorzugt über eine Inkubation mit Hefen, die dazu geeignet sind, Polyphosphat zu akkumulieren. Der Vorteil an einem biotechnologischen Verfahren ist, dass das Polyphosphat sehr kostengünstig in großen Mengen, d.h. in industriellen Maßstäben bereitgestellt werden kann. Das Polyphosphat kann somit auf ökonomische Art und Weise im Industriemaßstab bereitgestellt werden, d.h. in Mengen, die eine ökonomische Verwendung dieses Polyphosphats als Lebensmittelzusatzstoff ermöglichen.

Das in dem Verfahren bereitgestellte wässrige Gemisch kann einen pH-Wert von < 7,5, bevorzugt ≤ 6,5, besonders bevorzugt ≤ 5,5, aufweisen. Vorteil an einem pH-Wert in diesem Bereich ist, dass die Phytase eine höhere Aktivität aufweist und die Hydrolysereaktion effizienter und schneller abläuft. Das Phosphat und die Phytat-reduzierte Biomasse kann mithin ökonomischer bereitgestellt werden. Ferner kann das in dem Verfahren bereitgestellte Gemisch einen pH-Wert von ≥ 2, bevorzugt ≥ 3, besonders bevorzugt ≥ 4, insbesondere 5, aufweisen. Ein pH-Wert in diesem Bereich ist vorteilhaft, da weniger Säure als bei der reinen Säurehydrolyse von Phytat eingesetzt werden muss, was ökonomischer und für Anwender des Verfahrens sicherer ist. Zudem ist ein korrosiver Einfluss auf Materialien (z.B. Reaktionsbehälter), die in dem Verfahren eingesetzt werden, reduziert.

In einer bevorzugten Ausführungsform enthält das bereitgestellte wässrige Gemisch eine Puffersubstanz, die einen pKₛ-Wert im sauren pH-Bereich aufweist. Der Vorteil an der Verwendung einer Puffersubstanz ist, dass eine hohe Phytaseaktivität über die gesamte Reaktionsdauer sichergestellt werden kann. Der pKₛ-Wert der Puffersubstanz liegt bevorzugt im Bereich von 2 bis 6. Besonders bevorzugt ist die Puffersubstanz ausgewählt aus der Gruppe bestehend aus Acetat-Puffer, Glycin-HCI-Puffer und Kombinationen hiervon. Diese Puffer haben den Vorteil, dass sie kostengünstig sind und das Verfahren damit ökonomisch durchgeführt werden kann. Zudem weisen diese Puffer eine hohe Verträglichkeit für Nutztiere auf, sodass insofern keine Notwendigkeit besteht, den Puffer von der Phytat-reduzierten Biomasse abzutrennen. Die Bereitstellung der Phytat-reduzierten Biomasse als Futtermittel gestaltet sich dadurch ökonomischer.

Die in dem Gemisch bereitgestellte Phytat-haltige Biomasse kann mindestens 0,1 Gew.-%, bevorzugt mindestens 0,2 Gew.-%, besonders bevorzugt mindestens 0,4 Gew.-%, insbesondere mindestens 0,5 Gew.-%, Phytat, in Bezug auf das Trockengewicht des Rohstoffs (d.h. der phytathaltigen Biomasse), aufweisen. Höhere Phytat-Gehalte haben den Vorteil, dass die Ausbeute an Phosphat steigt.

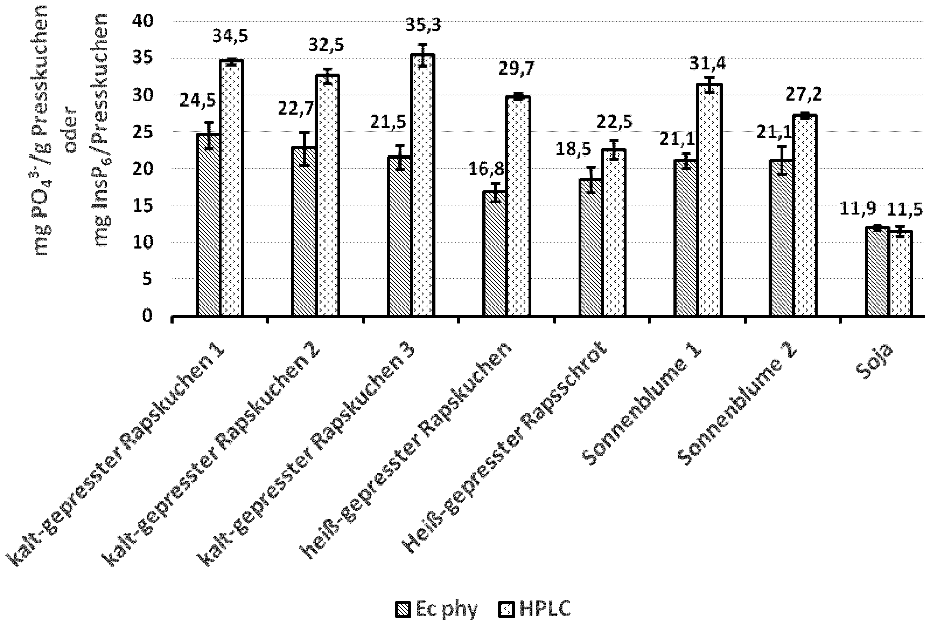

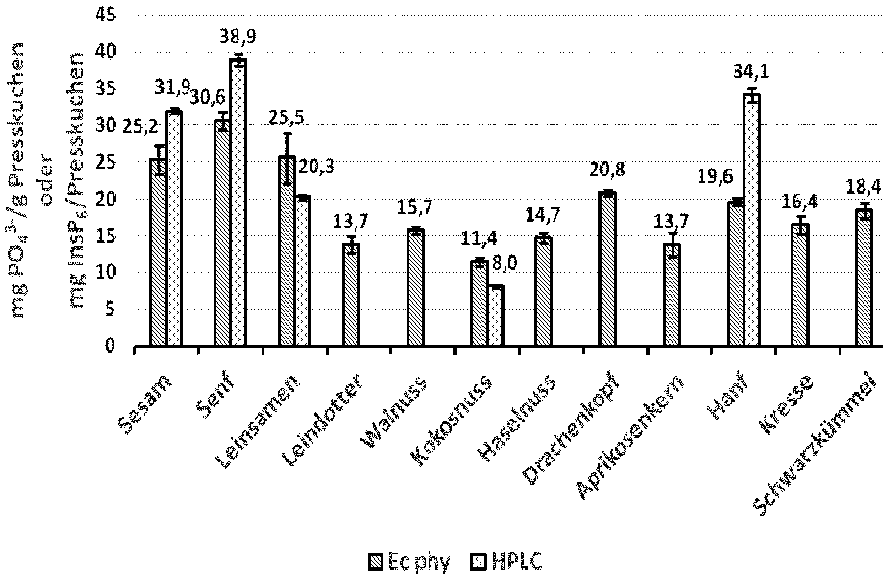

In einer bevorzugten Ausführungsform enthält die im Gemisch bereitgestellte Phytat-haltige Biomasse eine Pflanzenbiomasse oder besteht daraus, bevorzugt eine Biomasse ausgewählt aus der Gruppe bestehend aus Pflanzensamen, Getreide, Pflanzenkleie (z.B. Weizenkleie, Roggenkleie und/oder Reisschalkleie), Nüsse und Kombinationen hiervon. Insbesondere Pflanzensamen, Getreide, Pflanzenkleie und/oder Nüsse sind besonders reich an Phytat und eignen sich somit besonders gut, hohe Mengen an Phosphat über das Verfahren bereitzustellen. Zudem scheinen diese Biomassen nur einen geringen Gehalt zweiwertiger Ionen aufzuweisen, da bei diesen Biomassen kaum eine Ausfällung von aus Phytat freigesetztem Phosphat beobachtet wurde. Bei einer Verwendung solcher Biomassen ist daher eine Entfernung von zweiwertigen Ionen aus dem Gemisch vor der Zugabe von Phytase nicht erforderlich, was Zeit und Kosten spart und das Verfahren einfacher gestaltet. Bevorzugt ist die Phytat-haltige Biomasse ausgewählt aus der Gruppe bestehend aus Rapssamen, Sonnenblumensamen, Sojabohnen, Weizenkleie, Roggenkleie, Reisschalkleie und Kombinationen hiervon, da diese Biomassen sehr hohe Ausbeuten in Bezug auf die Phosphatgewinnung zeigen (siehe Figur 2) und zudem - zumindest in Deutschland - kostengünstig und in sehr großen jährlichen Mengen zur Verfügung stehen (z.B. ca. 11 Megatonnen Rapssamen pro Jahr in Deutschland).

Es ist bevorzugt, dass die in dem Gemisch bereitgestellte Phytat-haltige Biomasse Schwermetalle und radioaktive Kontaminanten, insbesondere Cadmium, Uran und Chrom, in einer Gesamtmenge von nur insgesamt < 100 ppm, bevorzugt < 50 ppm, besonders bevorzugt < 30 ppm aufweist. Es ist weiter bevorzugt, dass die Phytat-haltige Biomasse Cadmium in einer Gesamtmenge von < 50 ppm, bevorzugt < 30 ppm, besonders bevorzugt < 10 ppm, aufweist. Der Vorteil hierbei ist, dass über das Verfahren eine Phytat-reduzierte Biomasse hergestellt wird, die einen geringen Schwermetallanteil und einen geringen Anteil an radioaktiven Kontaminanten aufweist. Ein weiterer Vorteil ist, dass über das Verfahren auf einfache, ökologisch und ökonomische Art und Weise Phosphat bereitgestellt wird, das keine Schwermetallbelastung und keine radioaktiven Kontaminanten aufweist und somit für die Lebensmittelherstellung geeignet ist. Bei konventioneller Bereitstellung von Phosphat aus Gesteinserzen ist diese nur auf kompliziertere und weniger ökologisch und ökonomische Art und Weise möglich, da die Gesteinserze hohe Anteile an Schwermetallen und radioaktiven Kontaminanten (z.B. an Cadmium und Uran) aufweisen können, die dann über aufwändige Verfahren entfernt werden müssen.

Die in dem Gemisch bereitgestellte Phytat-haltige Biomasse kann kaltgepresst und entölt worden sein, bevorzugt über Druckausübung durch eine Schneckenpresse bei einer Temperatur von ≤ 70°C. Die Verwendung einer entölten Biomasse hat einerseits den Vorteil, dass ein wertvoller Stoff (Öl) vorher abgetrennt wird und als eigenes Nahrungsmittel (z.B. für Menschen) zur Verfügung steht. Zudem wird durch die Entölung ein negativer Einfluss auf die Phytaseaktivität verhindert, wodurch das Verfahren effizienter wird. Ferner ist bei einer entölten Pflanzenbiomasse die Zellwand der Pflanzenzellen aufgeschlossen, was eine höhere freie Verfügbarkeit des in den Zellen enthaltenen Phytats ermöglicht. Durch den Entölungsprozess ist auch die Konzentration an Ionen in dem bereitgestellten wässrigen Gemisch geringer, wodurch eine Ionen-bedingte Ausfällung von Phosphat vermieden wird und gelöstes Phosphat schneller, kostengünstiger und einfacher isoliert werden kann.

Die in dem Gemisch bereitgestellte Phytat-haltige Biomasse kann ferner heißgepresst und entölt worden sein, bevorzugt über ein Heißextraktionsverfahren zur Ölherstellung, optional mit anschließender Lösungsmittelextraktion (z.B. mit Hexan als Lösungsmittel).

In einer bevorzugten Ausführungsform ist die in dem Gemisch bereitgestellte Biomasse in einer Mühle gemahlen worden. Der Vorteil an dem Mahlen der Biomasse ist, dass die Oberfläche der Biomasse im Verhältnis zu dessen Volumen steigt, was der Phytase mehr Angriffsfläche bietet und die in dem Verfahren stattfindende Hydrolysereaktion schneller und effizienter gestaltet.

Die Phytat-haltige Biomasse kann Pflanzenkleie enthalten oder daraus bestehen. Zur Herstellung von Pflanzenkleie werden gewöhnlich Pflanzensamen gemahlen und die Rückstände aus Schalen (Samenschale, Fruchtschale), der Aleuronschicht und dem Keimling gewonnen. Alternativ können die Pflanzensamen einem Prallstrahlverfahren unterzogen werden und somit die Pflanzenkleie gewonnen werden. Beide Verfahren sind bevorzugte Verfahren, um Pflanzenkleie als Phytat-haltige Biomasse bereitzustellen. Ein Pressen und Entölen der Biomasse ist bei der Verwendung von Kleie als Biomasse nicht erforderlich, was es erlaubt, das Verfahren schneller und weniger energieintensiv durchzuführen.

Die in dem Gemisch bereitgestellte Biomasse kann in dem Gemisch in Form von suspendierten Partikeln vorliegen, deren Partikelgröße ≤ 10 mm, bevorzugt ≤ 5 mm, besonders bevorzugt ≤ 1 mm, gemessen mit der Luftstrahlsieb-Methode, beträgt. Je kleiner die Partikel sind, desto größer ist die Angriffsfläche für die Phytase, wodurch die Hydrolyse von Phytat begünstigt ist und das Verfahren schneller und effizienter wird.

In einer bevorzugten Ausführungsform des Verfahrens wird die Phytat-haltige Biomasse nicht mit einem Extraktionsmittels kontaktiert, das ausgewählt ist aus der Gruppe bestehend aus CO₂, SO₂, NOₓ und Kombinationen hiervon. Unter NOₓ wird NO und NO₂ verstanden. Der Vorteil an dieser Verfahrensführung ist, dass ohne Verlust an Ausbeute von ortho-Phosphat Kosten gespart werden, die sonst für den Einsatz dieser Extraktionsmittel anfallen würden. Zudem wird eine korrosive Wirkung auf in dem Verfahren eingesetzte Behälter bei der Verwendung dieser Extraktionsmittel vermieden.

Das Verfahren kann dadurch gekennzeichnet sein, dass vor Zugabe der Phytase zu dem wässrigen Gemisch keine Zugabe einer Säure erfolgt, um den pH-Wert der wässrigen Suspension auf pH < 2 zu senken. Dies hat den Vorteil, dass alle Nachteile vermieden werden, die mit hohen Säuregaben verbunden sind. Dies sind beispielsweise hohe Kosten, eine geringe Sicherheit für Arbeiter und eine hohe korrosive Wirkung auf Behälter, die in dem Verfahren eingesetzt werden. Ferner ist ein pH-Wert unter 2 für die derzeit bekannten Phytasen nachteilig, da sie nur eine geringe bis gar keine Aktivität in diesem pH-Bereich zeigen.

Ferner kann das Verfahren dadurch gekennzeichnet sein, dass vor der Zugabe von Phytase keine Zugabe einer Substanz erfolgt, die dazu geeignet ist, zweiwertige Ionen in schwerlösliche chemische Verbindungen umzuwandeln. Der Vorteil hierbei ist, dass das Verfahren schneller, einfacher und kostengünstiger durchgeführt werden kann als Verfahren, bei denen dieser Schritt implementiert wird.

Die in dem Verfahren dem Gemisch zugegebene Phytase kann eine Phytase aus der Klasse der Histidin-Säure-Phosphatasen enthalten oder daraus bestehen, bevorzugt eine Gruppe-3-Phytase und/oder Gruppe-6-Phytase enthalten oder daraus bestehen.

Ferner kann die dem Gemisch zugegebene Phytase eine Phytase aus einem Bakterium der Enterobacteriaceae Familie und/oder einem Pilz enthalten oder daraus bestehen, bevorzugt eine Phytase aus einem Mikroorganismus enthalten oder daraus bestehen, der ausgewählt ist aus der Gruppe bestehend aus *E. coli., Y. mollaretii, D. castellii, Buttiauxella sp. (z.B. Buttiauxella GC21), H. alvei, C. braakii, S. occidentalis* (z.B. "truncated Soc phyt") und Kombinationen hiervon.

Es ist bevorzugt, dass die dem Gemisch zugegebene Phytase die Phytase rPhyXT52 (GenBank: KM873028.1 bzw. AKH61963.1) enthält oder daraus besteht. Die Verwendung der Phytase rPhyXT52 hat sich zur Bereitstellung von Phosphat aus einer Phytat-haltigen Biomasse als besonders effektiv erwiesen, d.h. es konnten hohe Phosphatausbeuten in sehr kurzer Zeit bereitgestellt werden.

Darüber hinaus kann die dem Gemisch zugegebene Phytase eine chimäre Phytase, die sich aus Polypeptidteilen von Phytasen aus mindestens zwei verschiedenen Mikroorganismen zusammensetzt, enthalten oder daraus bestehen, wobei die mindestens zwei verschiedenen Mikroorganismen bevorzugt ausgewählt sind aus der Gruppe bestehend aus *E. coli., Y. mollaretii, D. castellii, Buttiauxella sp., H. alvei, C. braakii und Schwanniomyces occidentalis.*

Abgesehen davon kann die dem Gemisch zugegebene Phytase mindestens zwei Phytasen, die aus verschiedenen Mikroorganismen stammen, aufweisen, wobei bevorzugt eine erste Phytase aus dem Mikroorganismus *D. castellii* stammt und eine zweite Phytase aus Metagenom-Analysen (z.B. Pilz-Garten Metagenom-Analysen) stammt, wobei die zweite Phytase insbesondere die Phytase rPhyXT52 (GenBank: KM873028.1 bzw. AKH61963.1) ist. Die Verwendung eines solchen Phytasegemisches hat sich zur Bereitstellung von Phosphat aus einer Phytat-haltigen Biomasse als besonders effektiv erwiesen, d.h. es konnten hohe Phosphatausbeuten in sehr kurzer Zeit bereitgestellt werden.

In einer bevorzugten Ausführungsform wird dem Gemisch eine Phytase zugegen, die von einem (rekombinanten) Mikroorganismus, bevorzugt von einer Hefe, besonders bevorzugt von einer *Pichia-Hefe,* ganz besonders bevorzugt von *Pichia pastoris,* hergestellt wurde, insbesondere von dem (rekombinanten) Mikroorganismus in ein Fermentationsmedium sekretiert wurde. Der Vorteil an der Verwendung einer Phytase, die in ein Fermentationsmedium sekretiert wurde, ist, dass die Zellen des Mikroorganismus nicht aufgeschlossen werden müssen, um die Phytase zugänglich zu machen. Durch Einsparung eines Aufschließungsschritts lässt sich das Verfahren schneller und kostengünstiger, mithin ökonomischer, durchführen.

Es ist bevorzugt, dass die Phytase dem wässrigen Gemisch zusammen mit einem Fermentations-Überstand zugegeben wird, in das die Phytase von einem Mikroorganismus sekretiert wurde. Der Vorteil hierbei ist, dass die Phytase aus dem Fermentations-Überstand nicht aufgereinigt werden muss, d.h. dieser Schritt wird eingespart, wodurch das Verfahren schneller und kostengünstiger, d.h. ökonomischer, durchgeführt werden kann. Bevorzugt weist der Fermentations-Überstand keine biologischen Zellen (mehr) auf. Vorteil hierbei ist, dass weder das bereitgestellte Phosphat noch die bereitgestellte Phytat-reduzierte und Phosphat-reduziere Biomasse biologische Zellen aufweist und damit deren Verwendung als Lebensmittel unbedenklich ist.

Die Phytase kann dem wässrigen Gemisch in einer Menge zugegeben werden, dass die Phytase eine Konzentration im Bereich von 0,1 bis 200 µg/g Biomasse, bevorzugt im Bereich von 0,2 bis 100 µg/g Biomasse, besonders bevorzugt im Bereich von 0,5 bis 75 µg/g Biomasse, insbesondere im Bereich von 1 bis 50 µg/g Biomasse, aufweist. Ferner kann die Phytase dem wässrigen Gemisch in einer Menge zugegeben werden, dass die Phytase eine Aktivität im Bereich von 0,1 bis 1000 U/g Biomasse, bevorzugt im Bereich von 0,25 bis 500 U/g Biomasse, besonders bevorzugt im Bereich von 0,5 bis 100 U/g Biomasse, insbesondere im Bereich von 1 bis 50 U/g Biomasse, aufweist. Eine Konzentration der Phytase in diesen Bereichen hat sich als ausreichend hoch und wirtschaftlich erwiesen.

In einer bevorzugten Ausführungsform des Verfahrens wird in Schritt c) bei einer Temperatur im Bereich von mindestens 20°C, bevorzugt mindestens 25°C, besonders bevorzugt mindestens 30°C, ganz besonders bevorzugt mindestens 35°C, insbesondere mindestens 37°C, inkubiert. Eine Temperatur in diesen Bereichen stellt eine ausreichend hohe Aktivität der Phytase sicher, wodurch das Phosphat und die Phytat-reduzierte Biomasse schnell und ökonomisch bereitgestellt werden können.

Zudem kann in Schritt c) des Verfahrens bei maximal 70°C, bevorzugt maximal 60°C, besonders bevorzugt maximal 50°C, insbesondere maximal 40°C, inkubiert werden. Je niedriger die Temperatur, desto weniger Energie wird zur Durchführung des Verfahrens benötigt, d.h. desto ökonomischer kann es durchgeführt werden.

Darüber hinaus kann in Schritt c) des Verfahrens für einen Zeitraum von 0,5 bis 40 Stunden, bevorzugt 1 bis 30 Stunden, besonders bevorzugt 2 bis 25 Stunden, ganz besonders bevorzugt 3 bis 20 Stunden, insbesondere 3 bis 15 Stunden, inkubiert werden. Kurze Zeiträume sind für eine ökonomische Bereitstellung großer Mengen an Phosphat und Phytat-reduzierter Biomasse vorteilhaft.

In einer bevorzugten Ausführungsform wird in Schritt c) des Verfahrens das wässrige Gemisch während der Inkubation durchmischt. Das Durchmischen kann durch Rühren erfolgen, bevorzugt durch Rühren mit einer Geschwindigkeit von 1 bis 500 U/min, bevorzugt 20 bis 400 U/min, besonders bevorzugt 50 bis 300 U/min. Ferner kann das Durchmischen durch Schütteln erfolgen, bevorzugt durch ein kreisendes, wippendes und/oder taumelndes Schütteln, wobei das Schütteln insbesondere von einem Schüttler ausgewählt aus der Gruppe bestehend aus Thermoschüttler, Überkopf-Mischer und Rollen-Mischer durchgeführt wird.

Erfindungsgemäß wird ferner eine Biomasse bereitgestellt, die ausgewählt ist aus der Gruppe bestehend aus Pflanzensamen, Getreide, Nüsse und Kombinationen hiervon und dadurch gekennzeichnet ist, dass sie Phytat-reduziert und Phosphat-reduziert ist. Der Vorteil an der Biomasse ist, dass sie als Futtermittel in größeren täglichen Mengen (bzw. in einem höheren Anteil im Futtermittel) verabreicht werden kann, da der geringere Phytat-Anteil eine ausreichende Resorption von Mineralstoffen erlaubt. Es muss also nicht befürchtet werden, dass die Tiere einen Mangel an bestimmten Mineralstoffen (z.B. Calcium und Magnesium) erleiden. Darüber hinaus werden Felder, auf denen die Tiere gehalten werden, weniger stark mit freiem Phosphat (ortho-Phosphat) und vor allem deutlich weniger stark mit dem in Form von Phytat gebundenen Phosphat belastet, d.h. einer Form von Phosphat, die für Pflanzen nicht verwertbar ist.

Die Biomasse ist bevorzugt dergestalt Phytat-reduziert, dass die Gesamtmenge an Phytat ≤ 20 g, bevorzugt ≤ 10 g, besonders bevorzugt ≤ 5 g, insbesondere ≤ 1 g, Phytat pro kg der trockenen Biomasse beträgt. Je geringer der Anteil an Phytat in der Phytat-reduzierten Biomasse, desto schonender ist die Biomasse für Agrarfelder, wenn sie als Futtermittel für Tiere auf diesen Agrarfeldern eingesetzt wird.

Die Biomasse ist bevorzugt in einer Weise Phosphat-reduziert, dass die Gesamtmenge an freiem und gebundenem Phosphat um mindestens 10 %, bevorzugt mindestens 20 %, besonders bevorzugt mindestens 30 %, gegenüber dem natürlich (d.h. in der Natur) in der Biomasse vorkommenden Gehalt an freiem und gebundenem Phosphat, verringert ist. Mit "gebundenem" Phosphat ist Phosphat gemeint, dass in der Biomasse in einem mit *myo*-Inosit veresterten Zustand vorliegt und Phosphat, das in löslichen Phosphatverbindungen vorliegt (z.B. gebunden an DNA oder Lipide). Unter freiem Phosphat wird ortho-Phosphat verstanden.

Die Biomasse kann dadurch gekennzeichnet sein, dass sie durch das erfindungsgemäße Verfahren erhalten wurde. In diesem Fall weist die Biomasse Eigenschaften auf, die sich zwangsweise aus der Durchführung des erfindungsgemäßen Verfahrens ergeben.

Erfindungsgemäß wird zudem die Verwendung der erfindungsgemäßen Biomasse als
i) Nahrungsmittel, bevorzugt als Tierfuttermittel; und/oder
ii) Rohstoff in einem Verfahren zur Gewinnung von Zellstoff, bevorzugt als Rohstoff zur Kohlenhydratgewinnung und/oder Proteingewinnung; und/oder
iii) Rohstoff in einem Verfahren zur Herstellung von Einweggeschirr und/oder Folien;
vorgeschlagen.

Anhand der nachfolgenden Beispiele und Figuren soll der erfindungsgemäße Gegenstand näher erläutert werden, ohne diesen auf die hier gezeigten, spezifischen Ausführungsformen einschränken zu wollen.

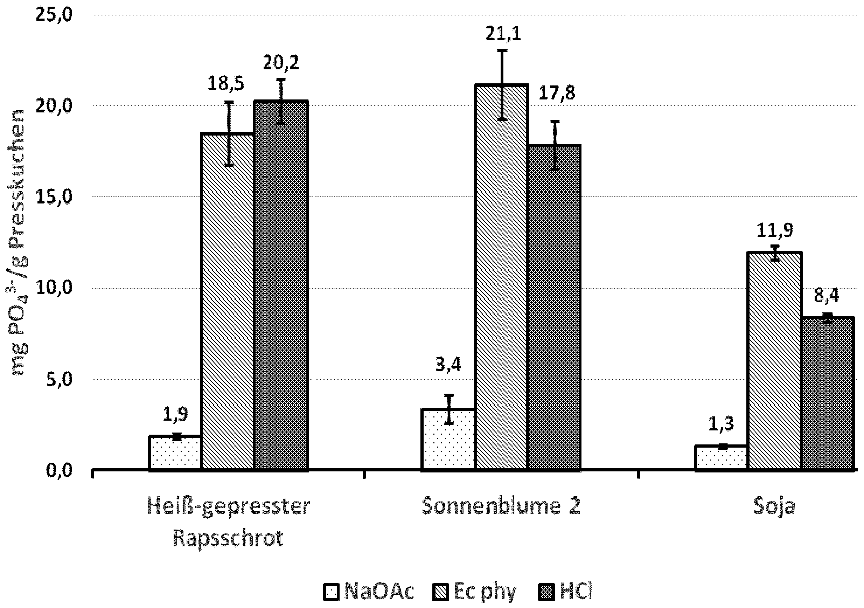

Figur 1 zeigt in Balkendiagrammen die aus Biomassen aus drei verschiedenen Pflanzen freigesetzte Menge an Phosphationen (PO₄³⁻) pro Gramm trockene und entölte Biomasse, die über eine Behandlung mit Phytase erhältlich ist, im Vergleich zur Menge an freien Phosphationen, die ohne eine Behandlung mit Phytase erhältlich ist. Bei den drei verschiedenen Biomassen handelt es sich um Rapssamenmehl, Sonnenblumensamenmehl und Sojasamenmehl. Die Probe A beschreibt den Gehalt an Phosphat, der ohne Behandlung mit Phytase bzw. vorheriger Säureextraktion von Phytat erhalten wurde. Bei allen getesteten Biomassen ist dieser Gehalt verhältnismäßig gering. Eine industrielle Bereitstellung von Phosphat ist somit wenig ökonomisch. Die Probe B (Phytase-Behandlung ohne vorherige Säureextraktion von Phytat) und die Probe C (Phytase-Behandlung mit vorheriger Säureextraktion von Phytat) zeigen demgegenüber deutlich erhöhte Werte an freien Phosphationen. Im Fall von Rapssamenmehl wurde bei den Proben B und C etwa die gleiche Menge PO₄³⁻ pro Gramm trockene und entölte Biomasse ermittelt. Im Fall von Sonnenblumenkernmehl und Sojabohnenmehl wurde für die Probe B (Phytase-Behandlung ohne vorherige Säureextraktion von Phytat) signifikant mehr PO₄³⁻ pro Gramm trockene und entölte Biomasse ermittelt als für Probe C (Phytase-Behandlung mit vorheriger Säureextraktion von Phytat). Durch die erfindungsgemäße Behandlung mit Phytase können bei Rapssamenmehl und Sonnenblumensamenmehletwa 2 Gew.-% der Biomasse als Phosphate gewonnen werden. Im Fall von Sojabohnenmehl stellen immerhin etwa 1 Gew.-% der Biomasse gewinnbare Phosphate dar. Die Menge an freiem PO₄³⁻ ohne eine erfindungsgemäße Behandlung ist mit maximal etwa 0,3 Gew.-% verhältnismäßig gering und eine industrielle Bereitstellung von Phosphat wenig ökonomisch.

Figuren 2A und 2B zeigen in Balkendiagrammen die aus Biomassen aus 20 verschiedenen Pflanzen freigesetzte Menge an Phosphationen (PO₄³⁻) pro Gramm trockene und entölte Biomasse nach einer Inkubationszeit von 16 Stunden bei 37°C und Schütteln bei 250 U/min in einem wässrigen Medium mit Acetatpuffer bei pH 5 und Anwesenheit von 22 µg Phytase pro Gramm Biomasse. Für 13 der 20 getesteten Biomassen ist zusätzlich eine Quantifizierung von Phytat über HPLC angegeben. Die höchsten Ausbeuten in Bezug auf die Phosphatgewinnung wurden bei den Senfsamen, Rapssamen, Sonnenblumensamen, Sesamsamen und Leinsamen erzielt.

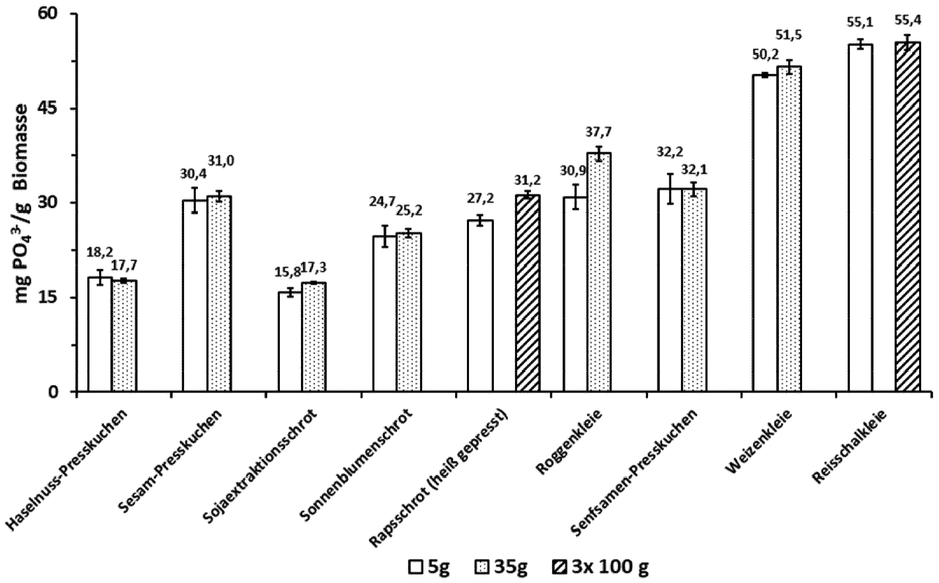

Figur 3 zeigt in einem Balkendiagramm die aus Biomassen aus neun verschiedenen Pflanzen freigesetzte Menge an Phosphationen (PO₄³⁻) pro Gramm trockener Biomasse. Zur Behandlung der Biomasse wurden Phytase-Enzyme zugesetzt, die eine Phosphatrückgewinnung aus Phytat, der hauptsächlichen P-Speicherform in Samen und Körnern, ermöglichen. Neben den entölten Samen von Sesam, Soja, Sonnenblume, Raps und Senf wurde die Kleie von Roggen, Weizen und Reis, sowie Haselnusspresskuchen untersucht. Als Extraktionsmenge wurden neben eines 5 g-Ansatzes auch die Rückgewinnung aus 35 g Biomasse (bzw. jeweils 3x 100 g-Ansätze für Rapsschrot und Reisschalkleie) durchgeführt. Die Extraktion wurde nach einer Inkubationszeit von 6 Stunden bei 37 °C und Schütteln bei 180 U/min in einem wässrigen Medium mit Citratpuffer bei pH 4,4 und Anwesenheit von insgesamt 4000 U Phytase/kg Biomasse (2000 U/kg einer Phytase aus dem Mikroorganismus *D*. *castelli* und 2000 U/kg Biomasse der Phytase rPhyXT52) beendet. Die Biomasse wurde durch Zentrifugation vom phosphathaltigen Überstand abgetrennt. Die höchsten Phosphat-Rückgewinnungsraten mit über 5 Gew.-% der Biomasse wurden bei Weizen- und Reisschalenkleie erzielt. Die Hochskalierung von 5 g auf 35 g bzw. 100 g verlief ohne Probleme und lieferte nahezu identische Ausbeuten wie im kleineren Maßstab.

### Beispiel 1 - Phosphatgewinnung über das erfindungsgemäße Verfahren im Vergleich zu alternativen Verfahren

Als Biomasse wurden die Samen aus den drei verschiedenen Pflanzen Raps, Sonnenblumen und Soja verwendet. Zunächst wurden die Samen über Heißpressen entölt und über eine Mühle zu einem feinen Mehl gemahlen. Anschließend wurde das Mehl der Biomassen in einem wässrigen Medium (Wasser) suspendiert. Es wurden drei verschiedene Proben A, B und C angesetzt, die sich jeweils durch das wässrige Medium unterschieden. Die Proben A bis C enthielten das folgende Medium:
Probe A: 50 mM Natriumacetat in Wasser, pH 5
Probe B: 50 mM Natrimacetat in Wasser, pH 5, 22 µg/g Biomasse Phytase
Probe C: HCl in Wasser, pH <1

Probe A sollte dazu dienen, die Menge an freiem Phosphat zu bestimmen, die bei pH 5 in Abwesenheit von Phytase aus der Biomasse gelöst wird. Probe B sollte dazu dienen, die Menge an freiem Phosphat zu bestimmen, die bei pH 5 in Anwesenheit von Phytase aus der Biomasse gelöst wird. Probe C sollte dazu dienen, die Menge an Phosphat zu bestimmen, die gewonnen werden kann, indem zunächst Phytat bei stark sauren Bedingungen aus der Biomasse gelöst wird und dieses Phytat anschließend durch Einwirkung von Phytase umgesetzt wird.

Hierfür wurden die Biomassen jeweils in den Medien der Proben A bis C suspendiert und bei 37°C für 16 Stunden inkubiert. Nach dieser Inkubationszeit wurde die Probe zentrifugiert und der Überstand verwendet, um jeweils die Menge an Phosphationen in dem Überstand zu bestimmen. Zur Bestimmung der Phosphatkonzentration wurde eine spektroskopische Phosphat-Bestimmung gemäß Shivange, A.V. et al. (Appl. Microbiol. Biotechnol., Bd. 95, S. 405-418) durchgeführt. Das Ergebnis der Quantifizierung ist in Figur 1 dargestellt.

### Beispiel 2 - Phosphatgewinnung über das erfindungsgemäße Verfahren mit Biomassen von unterschiedlichen Pflanzen

Das erfindungsgemäße Verfahren wurde unter Bedingungen durchgeführt, die der Behandlung von Probe B in Beispiel 1 entsprechen. Es wurden 20 verschiedene Pflanzenbiomassen getestet. Die Biomassen wurden vor der Durchführung des Verfahrens entölt, sofern nicht anders angegeben, durch Kaltpressen. Zur Bestimmung der Phosphatkonzentration wurde eine spektroskopische Phosphat-Bestimmung gemäß Shivange, A.V. et al. (Appl. Microbiol. Biotechnol., Bd. 95, S. 405-418) durchgeführt.

Für 13 der 20 getesteten Biomassen wurde zusätzlich eine Quantifizierung von Phytat über HPLC durchgeführt. Für die Quantifizierung von Phytat wurde die jeweilige Biomasse mit HCl auf einen pH-Wert von <1 eingestellt, um Phytat aus den Biomassen zu lösen. Anschließend wurde zentrifugiert, um die Biomasse vom Überstand abzutrennen. Der Überstand wurde über HPLC nach einem modifizierten Protokoll von Sandberg et al. (Sandberg, A.S. & Ahderinne, R., J. Food Sci., Bd. 51, S. 547-550) untersucht und die Menge an gelöstem Phytat bestimmt. Die Ergebnisse der ermittelten Phosphat-Konzentrationen und Phytat-Konzentrationen für die jeweiligen Biomassen sind in den Figuren 2A und 2B in Form von Säulendiagrammen und in der Tabelle unten dargestellt.

**Tabelle**

| | **PO₄**^{**3**-} **Gewinnung [g/kg]** | **PO₄³⁻ Gewinnung [g/kg]** | **PO₄**^{**3**-} **Gewinnung [g/kg]** | **InSP₆ Gehalt [g/kg]** |
|---|---|---|---|---|
| **Behandlung** | **Phytase** | **Puffer** | **HCl + Phytase** | **HCl** |
| **Probenname** | **Ec phy** | **NaOAc** | **HCl** | **HPLC** |
| Senf | 30.6 ± 1.2 | 6.7 ± 1,4 | 25.4 ± 1.9 | 38.9 ± 0.9 |
| Leinsamen | 25.5 ± 3.4 | 6.0 ± 1.1 | 12.1 ± 1.4 | 20.3 ± 0.3 |
| Sesam | 25.2 ± 2.0 | 3.0 ± 0.4 | 22.3 ± 1.8 | 31.9 ± 0.3 |
| Kalt-gepresster Rapskuchen 1 | 24.5 ± 1.8 | 4.9 ± 0.8 | 19,3 ± 1.1 | 34.5 ± 0.4 |
| Kalt-gepresster Rapskuchen 2 | 22.7 ± 2.2 | 3.1 ± 0.2 | 19.8 ± 2.1 | 32.5 ± 1.0 |
| Kalt-gepresster Rapskuchen 3 | 21.5 ± 1.6 | 2.1 ± 0.4 | 22.4 ± 2.2 | 35.3 ± 1.5 |
| Sonnenblume 1 | 21.1 ± 1.0 | 1.8 ± 0.2 | 19.2 ± 2.0 | 31.4 ± 1.1 |
| Sonnenblume 2 | 21.1 ± 1.9 | 3.4 ± 0.8 | 17.8 ± 1.3 | 27.2 ± 0.3 |
| Drachenkopf | 20.8 ± 0.4 | 5.5 ± 0.3 | 14.4 ± 0.7 | - |
| Hanf | 19.6 ± 0.4 | 3.1±0.2 | 20.6 ± 1.2 | 34.1 ± 1.0 |
| Schwarzkümmel | 18.4 ± 1.1 | 4.6 ± 0.4 | 14.8 ± 0.8 | - |
| Heiß-gepresster Rapsschrot | 18.5 ± 1.7 | 1.9 ± 0.1 | 20.2 ± 1.2 | 22.5 ± 1.2 |
| Heiß-gepresster Rapskuchen | 16.8 ± 1.2 | 1.4 ± 0.2 | 18.0 ± 1.3 | 29.7 ± 0.4 |
| Kresse | 16.4 ± 1.2 | 5.3 ± 0.3 | 16.9 ± 2.9 | - |
| Walnuss | 15.7 ± 0.4 | 2.7±0.2 | 11.3 ± 0.5 | - |
| Haselnuss | 14.7 ± 0.7 | 2.3 ± 0.3 | 8.9 ± 0.5 | - |
| Aprikosenkern | 13.7 ± 1.6 | 1.9 ± 0.2 | 12.9 ± 1.3 | - |
| Leindotter | 13.7 ± 1.1 | 3.5 ± 0.3 | 10.6 ± 1.0 | - |
| Soja | 11.9 ± 0.4 | 1.3 ± 0.1 | 8.4 ± 0.2 | 11.5 ± 0.7 |
| Kokosnuss | 11.4 ± 0.6 | 4.5 ± 0.2 | 10.7 ± 0.7 | 8.0 ± 0.1 |

### Beispiel 3 - Phosphatgewinnung über das erfindungsgemäße Verfahren aus Kleie sowie Hochskalierung

Das erfindungsgemäße Verfahren wurde bei 37 °C und Schütteln bei 180 U/min in einem wässrigen Medium mit Citrat-Puffer bei pH 4,4 und Anwesenheit von 4000 U Phytase/kg Biomasse (2000 U/kg Biomasse einer Phytase aus dem Mikroorganismus *D. castelli* und 2000 U/kg Biomasse der Phytase rPhyXT52) über einen Zeitraum von 6 Stunden durchgeführt. Neben der bereits beschriebenen Ansatzgröße von 5 g erfolgte auch eine Hochskalierung auf 35 g oder für Raps und Reis auf 100 g. Die großen Ansätze wurden statt in 50 ml Flacons in Bechergläsern durchgeführt, alle anderen Parameter waren identisch.

Es wurden neun verschiedene Pflanzenbiomassen getestet. Die Biomassen wurden vor der Durchführung des Verfahrens entölt (trifft für Schrot und Presskuchen zu) bzw. während der (Getreide-) Verarbeitung zu Mehl durch Absieben abgetrennt (trifft für Kleie zu) oder durch Schälen der Körner mit anschließendem Sieben gewonnen (trifft für Reisschalkleie zu). Zur Bestimmung der Phosphatkonzentration wurde eine spektroskopische Phosphat-Bestimmung gemäß Shivange, A.V. et al. (Appl. Microbiol. Biotechnol., Bd. 95, S. 405-418) durchgeführt.

Ein Vergleich der in Figur 3 dargestellten Ergebnisse mit den in den Figuren 1, 2A und 2B dargestellten Ergebnissen zeigt, dass durch die Verwendung einer Enzym-Mischung aus zwei Phytasen aus unterschiedlichen Organismen (eine Phytase aus *D. castelli* und die Phytase rPhyXT52) deutlich höhere Phosphat-Ausbeuten in wesentlich kürzerer Zeit erreicht werden konnten. Die beiden Phytasen wurden im Verhältnis 1:1 in Bezug auf ihre Aktivität eingesetzt. Insgesamt wurden der Biomasse 4000 U aktives Enzym pro Kilogramm zugesetzt.

Anhand des extrahierten Rapsschrots wird die verbesserte Ausbeute ersichtlich: Anstatt der Phosphatrückgewinnung von rund 1,8 Gew.-% der Biomasse innerhalb von 16 Stunden wie in Figur 2A gezeigt, können mit der Enzymmischung aus demselben Material 2,7 Gew.-% der Biomasse als Phosphat in nur sechs Stunden erhalten werden. Die höchsten Phosphat-Ausbeuten wurde für die drei Kleieproben von Roggen, Weizen und Reis mit 3,1, 5,0 und 5,5 Gew.-% der Biomasse erreicht (siehe Figur 3).

Die Hochskalierung der Extraktion von 5 g auf 35 g bzw. 3x 100 g für Raps und Reis liefert ähnliche Ausbeuten (siehe Figur 3). Die Maßstabsvergrößerung hat demnach keinen Einfluss auf die Phosphat-Extraktionseffizienz und ist im Labormaßstab problemlos möglich.

## Patentansprüche

1. Verfahren zur Bereitstellung von Phosphat aus einer Phytat-haltigen Biomasse, umfassend die Schritte
a) Bereitstellung eines wässrigen Gemisches, in dem eine Phytat-haltige Biomasse in Wasser suspendiert ist;
b) Zugabe einer Phytase zu dem wässrigen Gemisch;
c) Inkubieren für einen bestimmten Zeitraum; und
d) Abtrennen von Phosphat von dem Gemisch.

2. Verfahren gemäß dem vorhergehenden Anspruch, **dadurch gekennzeichnet, dass** in einem Schritt nach Schritt c) eine Phytat-reduzierte Biomasse von dem Gemisch abgetrennt wird, bevorzugt über mindestens einen Schritt ausgewählt aus der Gruppe bestehend aus Zentrifugation, Filtration und Kombinationen hiervon, wobei die Filtration besonders bevorzugt
i) ausgewählt ist aus der Gruppe bestehend aus Mikrofiltration, Ultrafiltration, Nanofiltration, Tellerzentrifugation und Kombinationen hiervon; und/oder
ii) eine Cross-Flow-Filtration ist.

3. Verfahren gemäß einem der vorhergehenden Ansprüche, **dadurch gekennzeichnet, dass** in Schritt d) das Phosphat von dem Gemisch abgetrennt wird über mindestens einen Schritt ausgewählt aus der Gruppe bestehend aus Zentrifugation, Fällung, Filtration und Kombinationen hiervon, wobei die Filtration besonders bevorzugt
i) ausgewählt ist aus der Gruppe bestehend aus Mikrofiltration, Ultrafiltration, Nanofiltration, Umkehrosmose und Kombinationen hiervon; und/oder
ii) eine Cross-Flow-Filtration ist.

4. Verfahren gemäß einem der vorhergehenden Ansprüche, **dadurch gekennzeichnet, dass** in einem Schritt
i) nach Schritt c) und vor Schritt d) ein Teil des im Gemisch vorhandenen Phosphats in Polyphosphat kondensiert wird; und/oder
ii) nach Schritt d) zumindest ein Teil des abgetrennten Phosphats zu Polyphosphat kondensiert wird;
wobei die Kondensation bevorzugt über ein biotechnologisches Verfahren erfolgt, besonders bevorzugt über eine Inkubation mit Hefen, die dazu geeignet sind, Polyphosphat zu akkumulieren.

5. Verfahren gemäß einem der vorhergehenden Ansprüche, **dadurch gekennzeichnet, dass** das wässrige Gemisch
i) einen pH-Wert von < 7,5, bevorzugt ≤ 6,5, besonders bevorzugt ≤ 5,5, aufweist; und/oder
ii) einen pH-Wert von ≥ 2, bevorzugt ≥ 3, besonders bevorzugt ≥ 4, insbesondere 5, aufweist; und/oder
iii) eine Puffersubstanz enthält, die einen pKₛ-Wert im sauren pH-Bereich aufweist, bevorzugt einen pKₛ-Wert im Bereich von 2 bis 6, wobei die Puffersubstanz besonders bevorzugt ausgewählt ist aus der Gruppe bestehend aus Acetat-Puffer, Glycin-HCI-Puffer und Kombinationen hiervon.

6. Verfahren gemäß einem der vorhergehenden Ansprüche, **dadurch gekennzeichnet, dass** die Phytat-haltige Biomasse
i) mindestens 0,1 Gew.-%, bevorzugt mindestens 0,2 Gew.-%, besonders bevorzugt mindestens 0,4 Gew.-%, insbesondere mindestens 0,5 Gew.-%, Phytat, in Bezug auf das Trockengewicht des Rohstoffs, enthält; und/oder
ii) eine Pflanzenbiomasse enthält oder daraus besteht, bevorzugt eine Biomasse ausgewählt aus der Gruppe bestehend aus Pflanzensamen, Getreide, Nüsse und Kombinationen hiervon, bevorzugt ausgewählt ist aus der Gruppe bestehend aus Rapssamen, Sonnenblumensamen, Sojabohnen, Weizenkleie und Kombinationen hiervon; und/oder
iii) Schwermetalle und radioaktive Kontaminanten, insbesondere Cadmium, Uran und Chrom, in einer Gesamtmenge von nur insgesamt < 100 ppm, bevorzugt < 50 ppm, besonders bevorzugt < 30 ppm, aufweist; und/oder Cadmium in einer Gesamtmenge von nur < 50 ppm, bevorzugt < 30 ppm, besonders bevorzugt < 10 ppm, aufweist.

7. Verfahren gemäß einem der vorhergehenden Ansprüche, **dadurch gekennzeichnet, dass** die Phytat-haltige Biomasse
i) kaltgepresst und entölt wurde, bevorzugt über Druckausübung durch eine Schneckenpresse bei einer Temperatur von ≤ 70°C; und/oder
ii) heißgepresst und entölt wurde, bevorzugt über ein Heißextraktionsverfahren zur Ölherstellung, optional mit anschließender Lösungsmittelextraktion; und/oder
iii) in einer Mühle gemahlen wurde; und/oder
iv) Pflanzenkleie enthält oder daraus besteht, wobei die Pflanzenkleie bevorzugt hergestellt wurde, indem Pflanzenkleie von gemahlenen Pflanzensamen und/oder von prallgestrahlten Pflanzensamen abgetrennt wurde; und/oder
v) in dem Gemisch in Form von suspendierten Partikeln vorliegt, deren Partikelgröße ≤ 10 mm, bevorzugt ≤ 5 mm, besonders bevorzugt ≤ 1 mm, gemessen mit der Luftstrahlsieb-Methode, beträgt;
und/oder
vi) nicht mit einem Extraktionsmittels kontaktiert wird, das ausgewählt ist aus der Gruppe bestehend aus CO₂, SO₂, NOₓ und Kombinationen hiervon.

8. Verfahren gemäß einem der vorhergehenden Ansprüche, **dadurch gekennzeichnet, dass** vor Zugabe der Phytase zu dem wässrigen Gemisch keine Zugabe
i) einer Säure erfolgt, um den pH-Wert der wässrigen Suspension auf pH < 2 zu senken; und/oder
ii) keine Zugabe einer Substanz erfolgt, die dazu geeignet ist, zweiwertige Ionen in schwerlösliche chemische Verbindungen umzuwandeln.

9. Verfahren gemäß einem der vorhergehenden Ansprüche, **dadurch gekennzeichnet, dass** die Phytase
i) eine Phytase aus der Klasse der Histidin-Säure-Phosphatasen enthält oder daraus besteht, bevorzugt eine Gruppe-3-Phytase und/oder Gruppe-6-Phytase enthält oder daraus besteht; und/oder
ii) eine Phytase aus einem Bakterium der Enterobacteriaceae Familie und/oder einem Pilz enthält oder daraus besteht, bevorzugt eine Phytase aus einem Mikroorganismus enthält oder daraus besteht, der ausgewählt ist aus der Gruppe bestehend aus *E. coli., Y. mollaretii, D. castellii, Buttiauxella sp., H. alvei, C. braakii, S. occidentalis* und Kombinationen hiervon; und/oder
iii) die Phytase rPhyXT52 enthält oder daraus besteht; und/oder
iv) eine chimäre Phytase, die sich aus Polypeptidteilen von Phytasen aus mindestens zwei verschiedenen Mikroorganismen zusammensetzt, enthält oder daraus besteht, wobei die mindestens zwei verschiedenen Mikroorganismen bevorzugt ausgewählt sind aus der Gruppe bestehend aus *E. coli., Y. mollaretii, D. castellii, Buttiauxella sp., H. alvei, C. braakii und Schwanniomyces occidentalis;* und/oder
v) mindestens zwei Phytasen, die aus verschiedenen Mikroorganismen stammen, aufweist, wobei bevorzugt eine erste Phytasen aus dem Mikroorganismus *D. castellii* stammt und eine zweite Phytase aus einem Metagenom stammt, wobei die zweite Phytase insbesondere die Phytase rPhyXT52 ist; und/oder
vi) von einem Mikroorganismus, bevorzugt von einer Hefe, besonders bevorzugt von einer *Pichia-Hefe,* ganz besonders bevorzugt von *Pichia pastoris,* hergestellt wurde, insbesondere von dem Mikroorganismus in ein Fermentationsmedium sekretiert wurde; und/oder
vii) dem wässrigen Gemisch zusammen mit einem Fermentations-Überstand zugegeben wird, in das die Phytase von einem Mikroorganismus sekretiert wurde, bevorzugt einem Fermentations-Überstand, der keine biologischen Zellen aufweist.

10. Verfahren gemäß einem der vorhergehenden Ansprüche, **dadurch gekennzeichnet, dass** die Phytase dem wässrigen Gemisch in einer Menge zugegeben wird, dass die Phytase
i) eine Konzentration im Bereich von 0,1 bis 200 µg/g Biomasse, bevorzugt im Bereich von 0,2 bis 100 µg/g Biomasse, besonders bevorzugt im Bereich von 0,5 bis 75 µg/g Biomasse, insbesondere im Bereich von 1 bis 50 µg/g Biomasse, aufweist; und/oder
ii) eine Aktivität im Bereich von 0,1 bis 1000 U/g Biomasse, bevorzugt im Bereich von 0,25 bis 500 U/g Biomasse, besonders bevorzugt im Bereich von 0,5 bis 100 U/g Biomasse, insbesondere im Bereich von 1 bis 50 U/g Biomasse, aufweist.

11. Verfahren gemäß einem der vorhergehenden Ansprüche, **dadurch gekennzeichnet, dass** in Schritt c) bei einer Temperatur im Bereich von
i) mindestens 20°C, bevorzugt mindestens 25°C, besonders bevorzugt mindestens 30°C, ganz besonders bevorzugt mindestens 35°C, insbesondere mindestens 37°C, inkubiert wird; und/oder
ii) maximal 70°C, bevorzugt maximal 60°C, besonders bevorzugt maximal 50°C, insbesondere maximal 40°C, inkubiert wird; und/oder
iii) für einen Zeitraum von 0,5 bis 40 Stunden, bevorzugt 1 bis 30 Stunden, besonders bevorzugt 2 bis 25 Stunden, ganz besonders bevorzugt 3 bis 20 Stunden, insbesondere 3 bis 15 Stunden, inkubiert wird.

12. Verfahren gemäß einem der vorhergehenden Ansprüche, **dadurch gekennzeichnet, dass** in Schritt c) das wässrige Gemisch während der Inkubation durchmischt wird, bevorzugt während der Inkubation
i) durch Rühren durchmischt wird, bevorzugt durch Rühren mit einer Geschwindigkeit von 1 bis 500 U/min, bevorzugt 20 bis 400 U/min, besonders bevorzugt 50 bis 300 U/min; und/oder
ii) durch Schütteln gemischt wird, bevorzugt durch ein kreisendes, wippendes und/oder taumelndes Schütteln, wobei das Schütteln insbesondere von einem Schüttler ausgewählt aus der Gruppe bestehend aus Thermoschüttler, Überkopf-Mischer und Rollen-Mischer durchgeführt wird.

13. Biomasse ausgewählt aus der Gruppe bestehend aus Pflanzensamen, Getreide, Nüsse und Kombinationen hiervon, **dadurch gekennzeichnet, dass** die Biomasse
a) Phytat-reduziert ist, wobei die Gesamtmenge an Phytat bevorzugt ≤ 20 g, besonders bevorzugt ≤ 10 g, ganz besonders bevorzugt ≤ 5 g, insbesondere ≤ 1g, Phytat pro kg der trockenen Biomasse beträgt; und
b) Phosphat-reduziert ist, wobei die Gesamtmenge an freiem und gebundenem Phosphat um mindestens 10 %, bevorzugt mindestens 20 %, besonders bevorzugt mindestens 30 %, gegenüber dem natürlich in der Biomasse vorkommenden Gehalt an freiem und gebundenem Phosphat, verringert ist.

14. Biomasse gemäß Anspruch 13, **dadurch gekennzeichnet, dass** sie durch das Verfahren gemäß einem der Ansprüche 1 bis 12 erhalten wurde.

15. Verwendung der Biomasse gemäß einem der Ansprüche 13 oder 14 als
i) Nahrungsmittel, bevorzugt als Tierfuttermittel; und/oder
ii) Rohstoff in einem Verfahren zur Gewinnung von Zellstoff, bevorzugt als Rohstoff zur Kohlenhydratgewinnung und/oder Proteingewinnung; und/oder
iii) Rohstoff in einem Verfahren zur Herstellung von Einweggeschirr und/oder Folien.
